# EUROPEAN PATENT SPECIFICATION

(11) **EP 1 004 987 B1**
(45) Date of publication and mention of the grant of the patent: **20.04.2005**
(21) Application number: 98402981.9
(22) Date of filing: 27.11.1998
(51) Int. Cl.: G06T 15/00

(54) **Method and system for generating virtual scenes**
Verfahren und Gerät zur Erzeugung virtueller Szenen
Méthode et appareil pour générer des scenes virtuelles

(43) Date of publication of application: 31.05.2000
(73) Proprietor: FRANCE TELECOM, 75015 Paris (FR); TELEDIFFUSION DE FRANCE, 75015 Paris (FR)
(72) Inventor: Walczak, Krzysztof, 60-645 Poznan (PL); Cellary, Wojciech, 60-179 Poznan (PL)
(74) Representative: Keib, Gérard

(56) References cited:
- YAGEL AND HAGEN: "VIEWING IGES FILES THROUGH VRML" PROCEEDINGS VISUALIZATION '97, 19 - 24 October 1997, pages 471-474, XP002100014 NEW YORK,NY,USA
- WARRICK AND FUNNELL: "A VRML-BASED ANATOMICAL VISUALIZATION TOOL FOR MEDICAL EDUCATION" IEEE TRANSACTIONS ON INFORMATION TECHNOLOGY IN BIOMEDICINE, vol. 2, no. 2, June 1998, pages 55-61, XP002100015 NEW YORK,NY,US
- ROWE: "HYPERTEXT TO HYPERMEDIA AND BEYOND-THE EVOLUTION CONTINUES" PROCEEDINGS OF SIGDOC '97, 19 - 22 October 1997, pages 237-241, XP002100016 NEW YORK,NY,USA

## Description

The invention relates to a method and a system for generating virtual scenes intended to be displayed on at least one display device.

Methods for generating virtual worlds are already known. The VRML (Virtual Reality Modelling Language) international standard provides a list of descriptions of nodes that can be used to build a virtual world. In a virtual world constructed by the use of VRML, each node must be separately defined. The VRML standard provides only very limited support for virtual world parameterisation (DEF/USE statements). Although, building complex objects can be simplified by the use of prototypes (PROTO statements), they cannot be connected by the inheritance relationship. This makes the description of a virtual world more complex than necessary. Also, there are no standard means of accessing databases from a VRML system.

The document "Viewing IGES files through VRML", Jed Marti, PROCEEDING VISUALIZATION '97, 19-24 October 1997, p. 471-474, describes a method for converting files in IGES (Initial Graphic Exchange Specification) into VRML and HTML files.

The extension proposed recently by the VRML Consortium Enterprise Technology WG "Recommended practices for SQL Database Access" especially in the "Server Redirect" section, has serious limitations. It allows retrieval from a database only values of fields of existing nodes. It can be done directly only for supported types and must be done indirectly - by the use of Script nodes - for not-supported data types. Elements like nodes, prototypes, routes, and fields (not field values) cannot be retrieved from a database. This limitation particularly precludes the possibility to keep models of virtual worlds or their elements inside a database.

The invention overcomes these drawbacks by a method based on W3C Recommendation specifying XML syntax. This method extends the VRML International Standard.

The method according to the invention is characterised by the following steps:
- generating a virtual scene description in conformance with a description model based on a document structured markup language, this description model provides at least loops, conditional statements, assigning values to variables, inserting values, and use of classes;
- translating said description into a virtual scene modelling language;
- displaying said scene on at least one display device.

According to another characteristic of the invention, the description model is based on a document structured markup language and comprises non-nested data records representing modelling language tags which have names and sets of attribute specifications.

According to another aspect of the invention, the virtual world data used during the translation process, including nodes, prototypes, routes, fields, and all types of field values may be provided by at least one database.

An advantage of the invented method resulting from the use of concepts like variables, loops, and conditions, consists in simplification of the description of virtual worlds and a possibility of the description parameterisation. Particularly efficient is coding of elements that have a repeating structure.

Another advantage of this method results from the possibility of generation of modelling language descriptions on different levels of details of the virtual scenes or with different contents (e.g., depending on user privileges).

The method allows also building inheritance hierarchies of classes, which greatly improves efficiency of the coding virtual scenes, and makes the description of these scenes more concise. Furthermore, it enables code reuse.

The method allows database access at the time the virtual scenes are being dynamically generated in response to a user request. Any type of virtual scene data can be retrieved from a database.

A better understanding of the invention will be obtained by reference to the detailed description below, in conjunction with the following drawings in which:
- Figure 1 is a generalised schematic diagram of a system used for implementing the method according to the invention;
- Figure 2 illustrates an array of binary arithmetic operators used in method according to the invention;
- Figure 3 illustrates an array of relational arithmetic operators used in method according to the invention;
- Figure 4 illustrates an array of Boolean operators used in method according to the invention;
- Figure 5 illustrates binary string operator used in method according to the invention;
- Figure 6 illustrates an array of relational string operators used in method according to the invention;
- Figure 7 illustrates an array of operators used in method according to the invention

The following description concerns a particular mode of implementation of the method using the VRML language. For more convenience, the extension of the VRML language obtained by the method of the invention will be designated by the term X-VRML.

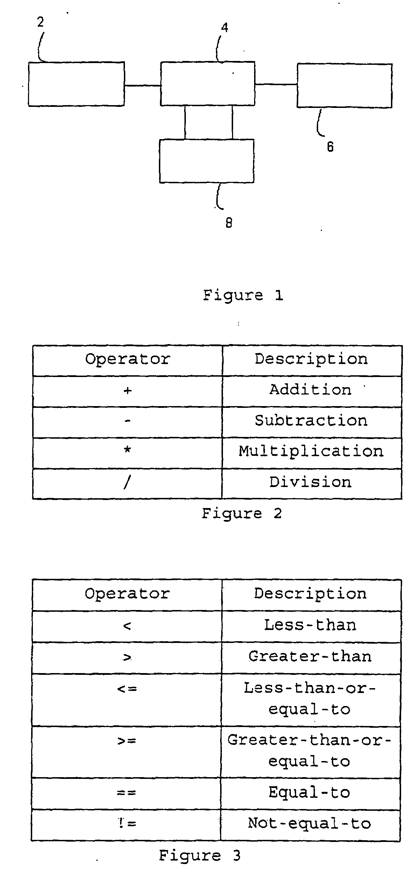

Figure 1 represents a system for implementing a method for generating virtual images of virtual scenes intended to be displayed on at least one display device and described by the use of nested XML elements containing at the lowest level VRML code.

By reference to Figure 1, a memory 2 comprising files, which contain X-VRML virtual scene descriptions, is connected to an XML parser 4. Said files are read by the parser 4 and parsed at the time of user request. The parser 4 constructs a map of XML elements representing X-VRML scene description components. This map is then analysed, interpreted, and converted to its final VRML form by an X-VRML processor 6. During this conversion process the X-VRML processor 6 can retrieve data from at least one database 8 used as a data repository. Said data can be included in the processing outcome and include attribute values, objects, class definitions, and fragments of VRML or X-VRML code. These data can also influent the process of generating the final VRML form.

According to one important aspect of the invention, the method comprises the following steps:
- generating a X-VRML virtual scene description in conformance with a description model based on XML or SGML language, this description model provides at least: loops, conditional statements, assigning values to variables, inserting values, connecting to a database, retrieving data from a database, and use of classes;
- translating said description into the VRML language;
- displaying said scene on at least one display device.

In a possible implementation of the method according to the invention, the VRML language may be replaced by the MPEG 4 language.

The X-VRML language defines data records expressed by XML tags, which have names and attribute specifications according to XML syntax. An attribute specification has a name and a value which may be a constant or an expression that must be evaluated prior to tag interpretation.

There are three types of tags: empty tags, start tags, and end tags. Empty-tags are commands used to denote empty elements, i.e., elements that do not contain X-VRML code. In one particular embodiment of the invention, tags are always delimited by special characters like the signs '<' and '>' for example, and cannot be nested. Every '<' character must be accompanied bey '>' character before a new '<' character can appear. Empty tags are indicated by the slash '/' character at the end of the tag. Examples of empty tags in X-VRML are "<CONNECT/>" and "<INSERT/>".

The beginning of every non-empty XML element is marked by a start-tag. Examples of start-tags in X-VRML are "<ITERATION>" and "<QUERY>".
The end of every element that begins with a start-tag must be marked by an end-tag. An end-tag has the same name as the corresponding start tag and is indicated by a slash '/' character in front of the tag name, e.g., "</ITERATION>" and "</QUERY>". A pair of start- and end-tags defines a non-empty element which may be nested. The text that is between a start-tag and its complementary end-tag forms element body whose meaning depends on the element type. Valid element nesting is defined by the Document Type Declaration (DTD). X-VRML descriptions of virtual scenes must consist of valid XML documents according to the X-VRML Document Type Declaration (DTD).

For coding elements that have repeating structure, the method according to the invention uses a number of tags in X-VRML implementing different types of loops:
- FOR, used for numerical values; the loop is repeated with a numerical control variable varying from a beginning to an ending value, every time changed by a step value;
- ITERATOR, repeated for each value in a specified list of values,
- WHILE, repeated as long as a condition is satisfied,
- QUERY, used to get data from a database; repeated for every row of data selected from a database.

The FOR loop may be used to repeat a fragment of code an arbitrary number of times with a numerical control variable. The variable takes values from a specified range (defined by FROM and TO attributes). During the first loop traversal it has assigned the value defined by the FROM attribute. During each of the next loop traversals its value is being modified by the STEP attribute. When the value declared in TO attribute is exceeded, the loop is not being repeated anymore.
The syntax of the FOR loop is the following:
<FOR NAME="..." FROM="..." TO="..." STEP="..."> </FOR>
The FOR element contains the X-VRML code that should be traversed a number of times with the changing control variable value. The FOR tag has four attributes: NAME, FROM, TO, and STEP.
The meaning of the attributes is the following:
NAME is mandatory and represents the name of the loop control variable. The value of the loop control variable may be accessed inside the loop.
FROM is mandatory and represents the initial value for the loop control variable. During the first loop traversal, the loop control variable is set to the value defined by this attribute. After each loop traversal the value of the control variable is being modified by the value specified by the STEP attribute.
TO is mandatory and represents the ending value for the control variable. When the control variable exceeds the value specified by the TO attribute, the loop is not repeated anymore.
STEP is optional and represents the value by which the control variable is modified after each loop traversal. The value of the STEP attribute may be positive indicating that the control variable should be increased after each loop traversal or negative indicating that the control variable value should be decreased. If the STEP attribute is omitted, the default value "1" is taken.

The ITERATION in X-VRML is a loop that is repeated an arbitrary number of times, once for each value specified in a list. For each of the loop traversals, the control variable is set to next value from the specified list of values. This control structure is particularly useful for repeating a fragment of code in a case when the list of occurrences is known during the design time. Nevertheless, since the list can contain not only constant values, but also expressions that are evaluated before the values are assigned to the control variable, this construct can be used also for values that are calculated during the parsing process. Values in the list are preferably separated by the comma sign ' , '.
The syntax of the iteration loop is the following:

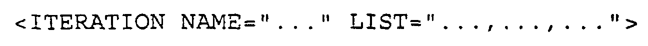

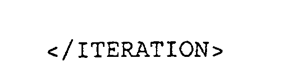

According to the invention, the ITERATION tag denotes a non-empty XML element containing the X-VRML code that should be repeated a number of times, once for each value in the value list. This tag has two attributes: NAME and LIST.
NAME is mandatory and represents the name of the loop control variable. The value of the control variable may be accessed inside the loop.
LIST is also mandatory and represents the list of values for the loop control variable. During the first traversal of the loop, the control variable value is set to the first element of the list. During each of the next traversals, the control variable is set to the succeeding elements in the list. The list can contain as well numeric as non-numeric values. These can be constant values entered during the design-time or expressions. Values of expressions are calculated before assigning them to the loop control variable.

The WHILE LOOP is a loop that is repeated as long as a condition is satisfied and does not have loop control variable. It is the responsibility of the programmer to organise the control inside the loop in such way, that the loop finally exists.
The syntax of the while loop is the following: 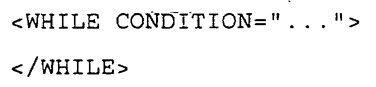 The while loop has one mandatory attribute: CONDITION. It should be an expression evaluating to a Boolean value. The loop is repeated as long as the condition evaluates to TRUE.

The QUERY loop is a special command for accessing data in a database. It is a loop that is being repeated for each row or object (depending on the type of the database used) obtained from a database in result of a query execution. Instead of one control variable, this loop uses a set of control variables. This set of control variables can be interpreted as a record with several fields. To simplify the notation, it is denoted as a set of separate names.
In the loop start-tag a list of names of variables and a query are specified. The number of names of variables should be equal to the number of attributes selected from the database by the query. For each of the loop traversals, values of selected attributes are assigned to variables identified by the provided list of names.
The syntax of the query loop is the following: 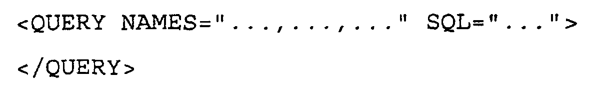 The QUERY tag requires two attributes:
NAMES is mandatory and represents a coma-separated list of names of loop control variables. Values of attributes, selected from the database, are assigned to variables identified by these names.
SQL is mandatory and represents the text of the SQL query to be executed in the database.

In a configuration of the system where the parser is not permanently connected to a database the query loop should be preceded by a CONNECT element. A connection established by one CONNECT element may be used by multiple QUERY elements.

As said above, the method according to the invention allows for conditional inclusion of fragments of X-VRML code. Conditional statements are expressed by the IF element. It is a non-empty XML element containing a part of the X-VRML code that is included in the outcome only if the specified condition is satisfied and optionally part that is included when the specified condition is not satisfied.
The syntax of the IF statement is the following: 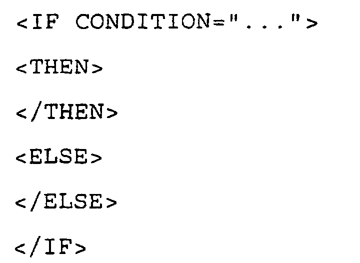
The IF tag has only one attribute: CONDITION. This mandatory attribute specifies an expression string that is evaluated to a Boolean value.
The IF element can contain only THEN and ELSE elements. If the CONDITION evaluates to TRUE, the THEN element is parsed. Otherwise, the ELSE element is parsed.

The method of the invention allows for assignment of a value to a variable by the use of the SET element. This is an empty element since it does not contain X-VRML code.
The SET element has the following syntax: 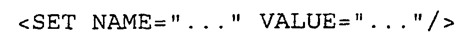 The SET tag uses two attributes:
NAME is mandatory and represents the name of the variable. The variable can be later referenced by the use of this name.
VALUE is optional and represents the value that should be assigned to the variable. This can be as well a simple constant value as an expression that must be first evaluated. If the VALUE attribute is omitted, the default value "TRUE" is assigned.

Calculated values of X-VRML expressions can be included into the outcome VRML file by the use of the INSERT empty element.
The syntax of the INSERT element is the following: 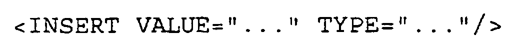 The processor 6 replaces the INSERT tag with the value calculated from the contents of the VALUE attribute. This attribute can contain a simple constant value, a variable reference, or an expression that must be evaluated by the processor 6 prior to inserting. The VALUE attribute is mandatory.
The TYPE attribute is optional and indicates the type of the value to be inserted. This attribute is used only for numerical and Boolean values. Possible values of the TYPE attribute are "FLOAT" and "INTEGER". If not specified, the "FLOAT" value is taken by default. The "INTEGER" type may be used with Boolean expressions to convert TRUE to "1" and FALSE to "0".

Before the processor 6 can connect to a database, it must be provided with some connection parameters. These parameters include DNS/IP of the computer the database is running on, the driver name, the Port number, the Database name, and the User/password.

Connection to a database is specified by the CONNECT element. The required connection parameters are concatenated into one connection string attribute.
The syntax of the CONNECT element is the following: 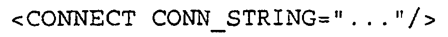 The CONNECT element is required only in a case when the X-VRML processor 6 requires data from a database to which it is not permanently connected.

In some implementations the processor 6 may be permanently connected to a database and in such case the CONNECT elements may not be required. The CONNECT element is not used when the processor 6 does not require data from a database (i.e., the X-VRML scene descriptions do not use the QUERY elements).
If the CONNECT element is required, it must precede all QUERY elements. More than one CONNECT element may appear in an X-VRML file. It allows retrieval of data from multiple databases. Each QUERY element uses connection parameters specified by the most recently parsed CONNECT element.

The method of the invention allows including X-VRML files in other X-VRML files. An empty element called INLINE accomplishes this task. During the parsing process, this tag is being replaced by the contents of the X-VRML file it references. Included X-VRML file may include other X-VRML files. The depth of the inclusion graph is not limited. The inclusion graph may contain cycles as long as the files are parameterised appropriately to assure that the process of inclusion is finite. All variables set in the main X-VRML file are visible in the included files, and all variables set in the included files are visible in the including files
The syntax of the INLINE element is the following: 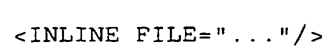 The INLINE element has one mandatory attribute: FILE, which indicates location and name (URL) of the X-VRML file to be included.

The method of the invention allows also definition of X-VRML classes. Some of the X-VRML classes may be translated by the X-VRML processor 6 to VRML prototypes. X-VRML classes, however, are a much more powerful tool than VRML prototypes themselves. In particular, X-VRML classes provide inheritance, multiple inheritance, abstract classes, object typing mechanism and the possibility of passing any elements as attributes (e.g. class names).
An X-VRML class is defined by a set of XML elements containing X-VRML code. The syntax of a class definition is the following: 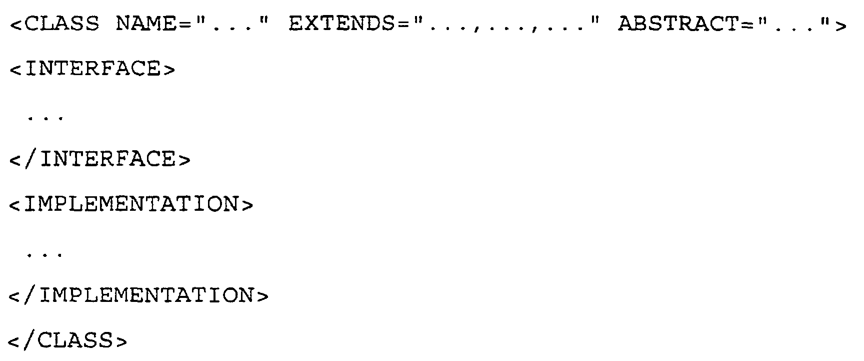 CLASS is the main element of the class definition. It may contain only two other elements: INTERFACE and IMPLEMENTATION.
The CLASS tag has three attributes:
NAME which is mandatory and which represents the name of the class. The name of the class must be unique in the whole X-VRML file and recursively in all files that are included in this file and those which include this file.
EXTENDS which is optional and which represents names of class or classes this newly created class extends. This can be a single class name if the class inherits only from one superclass, or a coma-separated list of class names if the class inherits from more than one superclass. The value "NONE" indicates that the class does not inherit from other classes. "NONE" is the default value.
ABSTRACT which is optional and which indicates that the class is abstract. An abstract class can use in its implementation abstract components that must be defined in subclasses. Default value for the ABSTRACT attribute is "FALSE", which means, that if the attribute is omitted, the class is assumed to be non-abstract.
The CLASS element may contain only two other elements, INTERFACE, and IMPLEMENTATION.
The INTERFACE element is optional and contains the interface part of the class definition. It contains declaration of attributes: fields, exposedFields, eventIns, and eventOuts in standard VRML syntax. If a class inherits from another class (extends it) it must declare only the attributes that are new or overridden in this new class. The attributes, which are inherited from a superclass, do not have to be listed in a subclass.
The IMPLEMENTATION element contains the actual X-VRML implementation of the class. Its contents corresponds to prototype implementation - in VRML contained in curly brackets ( "{" and "}" ). The implementation part of the class definition after processing by the X-VRML processor should be conformant to the VRML syntax.
If a class does not inherit from other X-VRML classes, the implementation part should contain the whole code of the class. If the class extends other classes, the implementation may contain the whole code of class or only parts of the code - parts that are defined, replaced, or added in this new class.
A class defined in X-VRML can be abstract. Abstract class is a class that is not fully defined and thus cannot be instantiated. An abstract class can use components that are not defined. These components can be specified later in subclasses. A subclass that defines all of its superclass components may be non-abstract. If it specifies only a subset of these components, it remains abstract.
Components in abstract classes are denoted by the COMPONENT element. It is an empty tag.
The syntax of the component element is the following: 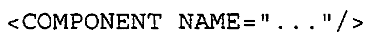 The component tag requires one attribute: NAME that represents the component identifier. It can be used by subclasses to define the component implementation. Only abstract classes can use the COMPONENT element.
A subclass of an abstract class may define a component used in its superclass by the use of DEFINE element. It has the following syntax: 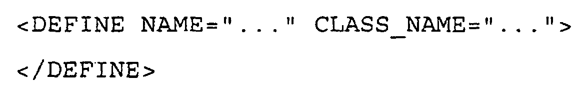 The DEFINE element is a non-empty XML element containing the X-VRML code that defines implementation of a component used by an abstract superclass. It has the mandatory attribute NAME which is the identifier of the component that is being defined. The code contained in a DEFINE element is used in place of a COMPONENT element of the same name in a superclass implementation.
An optional CLASS_NAME attribute must be used when the class inherits from more than one superclass to indicate the name of the superclass that contains the COMPONENT element to be replaced by the contents of the DEFINE element.
A class in X-VRML can extend an implementation of a superclass, in the sense that it can use the superclass implementation and add some additional code to it. A code of the superclass implementation can be referenced by the use of the SUPER element.
The syntax of the SUPER element is the following: 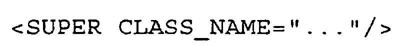 SUPER is an empty element that is substituted by the processor 6 with the actual implementation of a superclass. The SUPER tag has one optional attribute: CLASS_NAME that represents the name of the superclass the SUPER element is referencing. If the class inherits only from one superclass there is no need to specify the CLASS_NAME attribute. In case of multiple inheritance, where there are a number of superclasses for the class, the CLASS_NAME attribute is mandatory. There can be multiple references to a superclass in a class implementation. It means that the code of a superclass can be used multiple times in the subclass.
A class in X-VRML may override a part of the code of its superclass. To override a part of the implementation code the REPLACE element should be used. It is a non-empty element that contains the code of the replacement.
The syntax of the REPLACE element is the following: 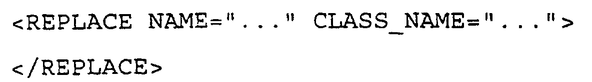 The REPLACE element has two attributes: NAME and CLASS_NAME.
The mandatory attribute NAME indicates the part of the super-class definition that should be replaced by the contents of the REPLACE element. The NAME attribute refers to a VRML element named by the use of standard VRML DEF statement in the super-class.
The optional CLASS_NAME attribute must be used when the class inherits from more than one superclass to indicate the superclass that contains the part of the code to be replaced by the contents of the REPLACE element.

The method of the invention allows use of a number of operators inside expressions. There are five types of operators:
- binary arithmetic operators
- relational arithmetic operators
- Boolean operators
- binary string operators
- relational string operators

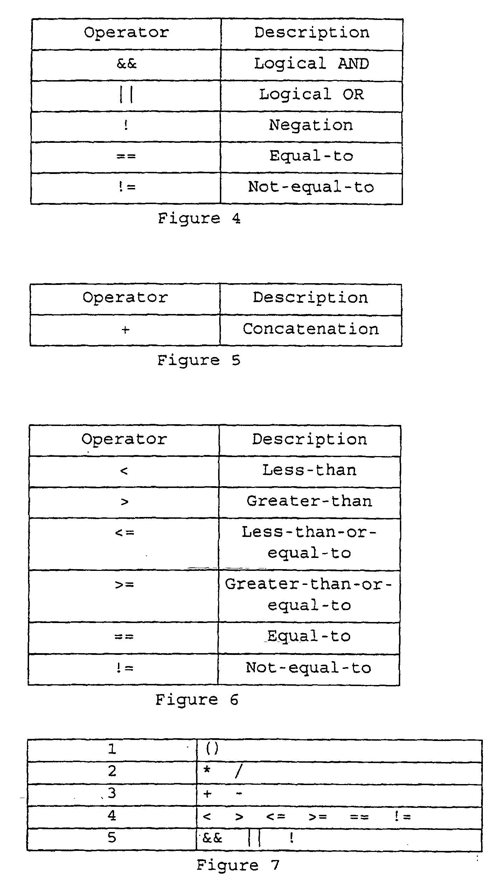

There are four binary arithmetic operators in X-VRML as shown in Figure 2: addition, subtraction, multiplication, and division. All of them use two arithmetic arguments and give arithmetic value as a result. There is no distinction between integer and floating point values during the expression calculation. A conversion can be made when the value is being inserted into the final VRML code.
Relational arithmetic operators are shown in Figure 3 and Boolean operators are shown in Figure 4. There is one binary string operator as shown in Figure 5 and a number of relational string operators as shown in Figure 6.
Relational arithmetic operators use two arithmetic values as arguments and return a Boolean value as the result. These operators are used for comparison of arithmetic values.
Boolean operators use one or two Boolean values as parameters and return a Boolean value in result. These operators can be used for a value computation and for comparison.
As shown in Figure 5, there is only one binary string operator, concatenation. It uses two string values as arguments and returns a string value in result. The operator appends the value of the second string at the end of the first string and returns the concatenated string as the result.
Relational string operators shown in Figure 6 are used for comparison of strings. These operators use two string values as arguments and return a Boolean value as the result.
X-VRML expressions are evaluated according to operator precedence shown in Figure 7.
Since the "( )" operator has the highest precedence, parenthesis "(" and ")" can be used inside expressions to change the order in which the expression is evaluated.
String constant used in expressions must use apostrophes " ' " as string delimiters.
Variables may be used inside expressions and text of elements. The X-VRML processor 6 replaces the variable reference with its actual value. To use a variable the variable name must be preceded with dollar sign " $ ". Two consequent dollar signs " $$ " denote a dollar sign.

The XML Syntax of X-VRML is represented below:

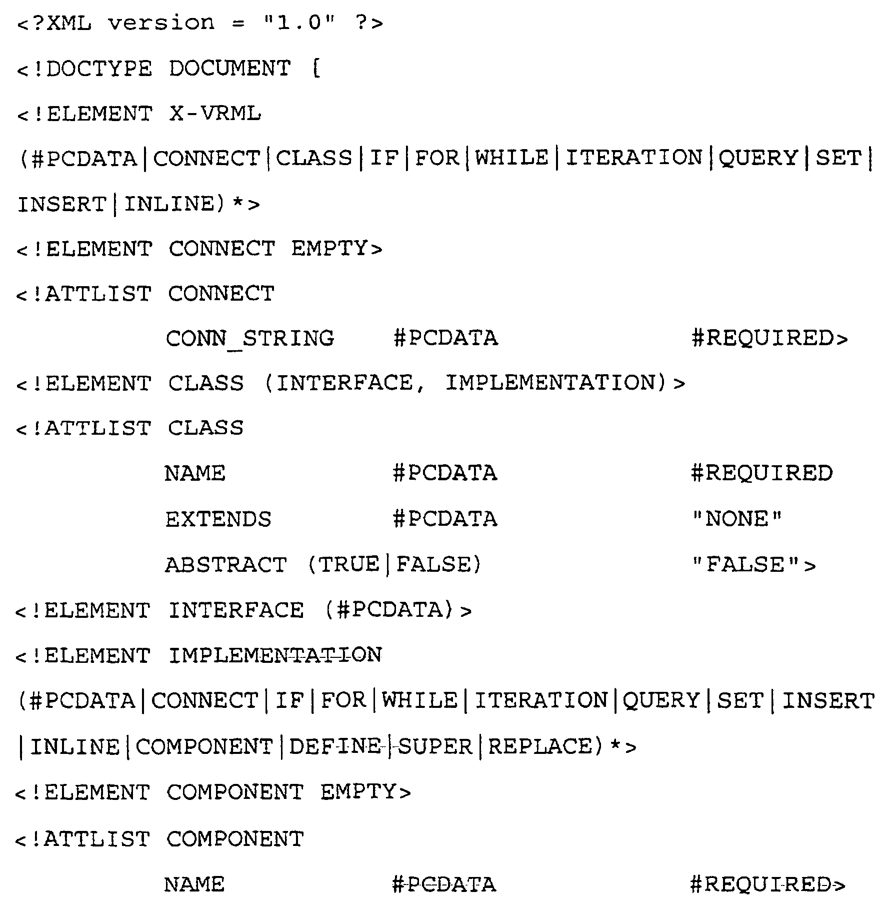

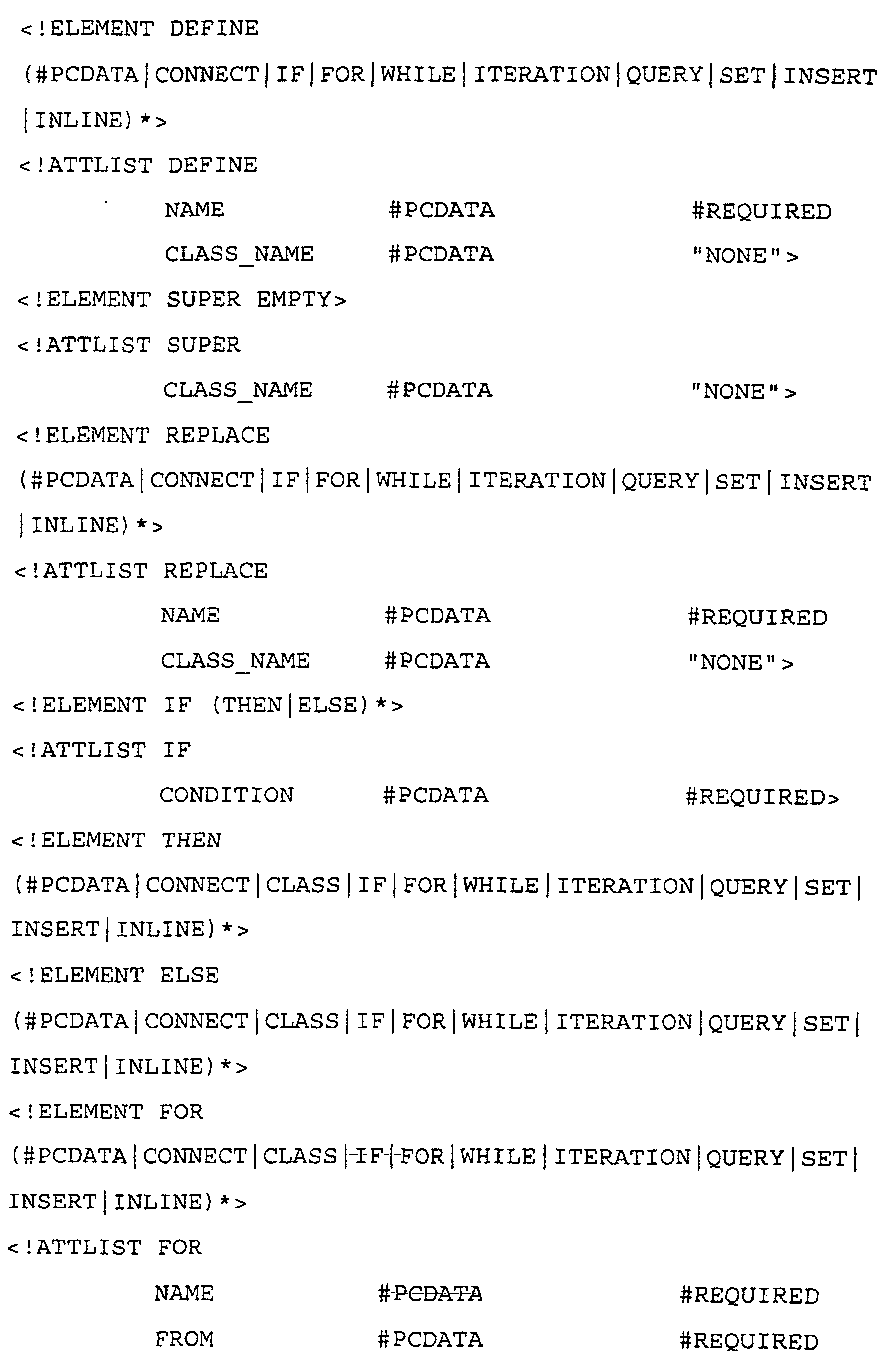

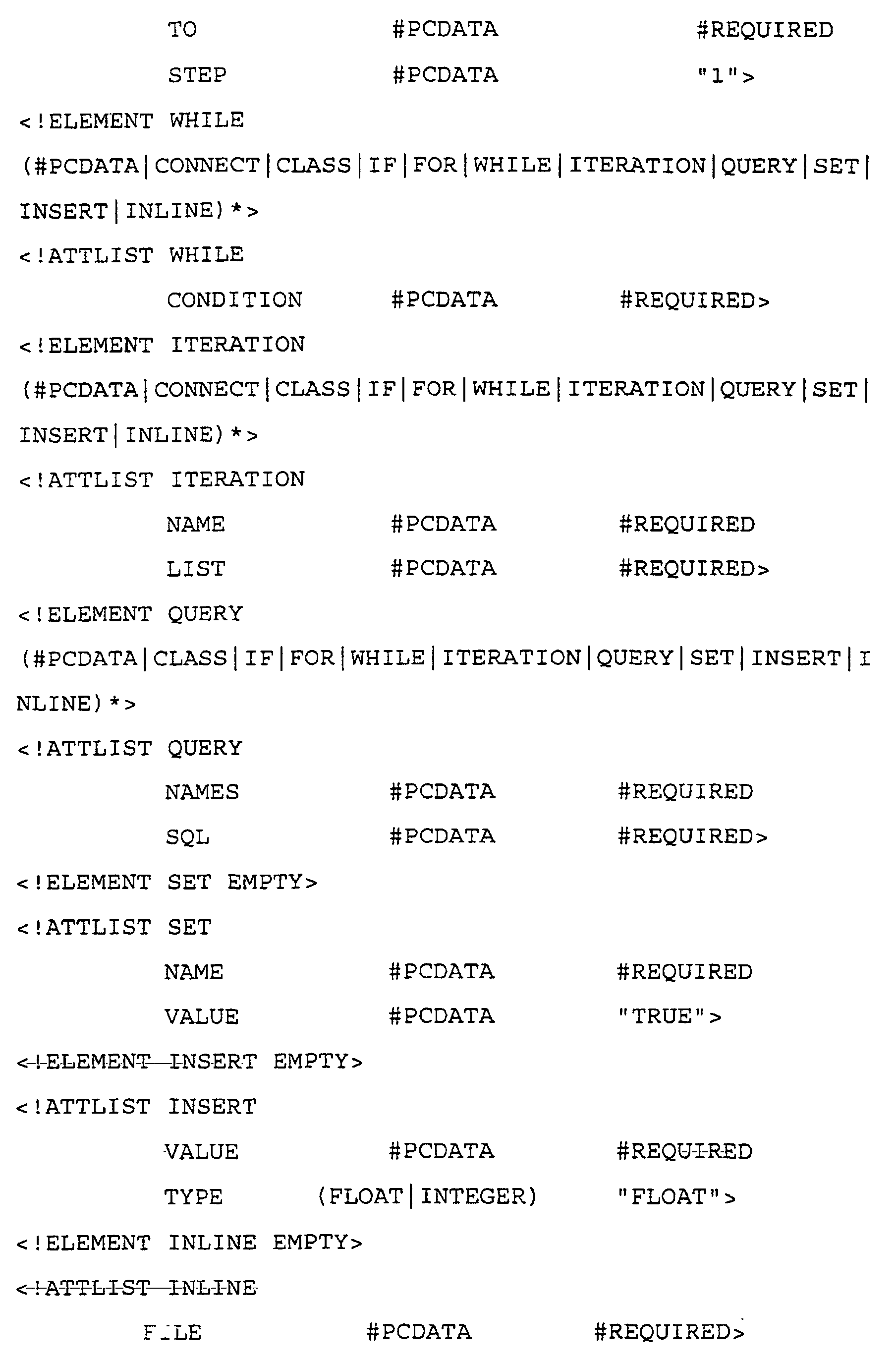

## Claims

1. Method for dynamically generating virtual scenes described in a virtual scene modelling language said virtual scene being intended to be displayed on at least one display device,
**characterised in that** said method comprises the following steps:
- generating a virtual scene description in conformance with a description model based on a document structured markup language, this description model providing at least loops, conditional statements, assigning values to variables, inserting values, and use of classes;
- translating said description into a virtual scene modelling language; and
- displaying said virtual scene on at least a display device.

2. Method according to claim 1, **characterised in that** said description model further provides statements for connecting to at least one database (8) and retrieving data from said database (8).

3. Method according to claim 2, **characterised in that** the virtual world data used during the translation process, including nodes, prototypes, routes, fields, and all types of field values, may be provided by said database (8).

4. Method according to anyone of claims 1 to 3, **characterised in that** said description model comprises non-nested data records expressed by XML tags which have names and attribute specifications.

5. Method according to claim anyone of claims 1 to 3, **characterised in that** said structured markup language is SGML.

6. Method according to anyone of claims 1 to 4, **characterised in that** said structured markup language is XML.

7. Method according to anyone of claims 1 to 6, **characterised in that** said virtual scene modelling language is VRML.

8. Method according to anyone of claims 1 to 6, **characterised in that** said modelling language is MPEG 4 scenes description format.

9. Method according to claim 4, **characterised in that** said XML tags comprise:
- empty tags used to denote empty elements, said empty tags containing no other elements or modelling language code,
- pairs of start-tags and end-tags having the same name used to define an element.

10. Method according to claim 3 to 9, **characterised by** the use of tags in said description model language implementing the following different types of loops:
- FOR tag, used for numerical values, the loop is repeated with a numerical control variable varying from a beginning to an ending value, every time changed by a step value.
- ITERATOR tag, repeated for each value in a specified list of values,
- WHILE tag, repeated as long as a condition is satisfied,
- QUERY tag, used to get data from a database, repeated for every row of data selected from a database.

11. Method according to claim 10, wherein the loop tag has the following syntax: 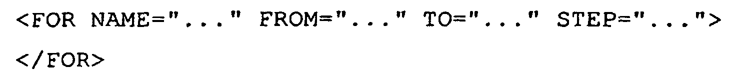 where FOR element contains the description model language code that should be traversed a number of times with the changing control variable value, NAME is a mandatory attribute representing the name of the loop control variable, value of the control variable may be accessed inside the loop, FROM is a mandatory attribute representing the initial value for the loop control variable, during the first loop traversal, the control variable is set to the value defined by this attribute, and after each loop traversal the value of the control variable is being modified by the value specified by the STEP attribute, TO is a mandatory attribute representing the ending value for the control variable, when the control variable exceeds the value specified by the TO attribute, the loop is not repeated anymore, STEP is an optional attribute representing the value by which the control variable is modified after each loop traversal, the value of said STEP attribute may be positive indicating that the control variable should be increased after each loop traversal or negative indicating that the control variable value should be decreased.

12. Method according to claim 10, wherein the ITERATION tag has the following syntax: 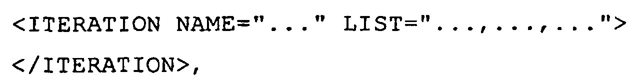 where NAME is a mandatory attribute representing the name of the loop control variable, the value of the control variable may be accessed inside the loop, LIST is a mandatory attribute representing the list of numeric or non-numeric values for the loop control variable, during the first traversal of the loop, the control variable value being set to the first element of the list, and during each of the next traversals, the control variable being set to the succeeding elements in the list, said values can be constant values entered during the design-time or expressions calculated before assigning them to the loop control variable.

13. Method according to claim 10, wherein the WHILE tag has the following syntax: 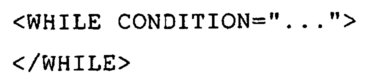 where CONDITION should be an expression evaluating to a Boolean value, the loop being repeated as long as the condition evaluates to TRUE.

14. Method according to claim 10, wherein the QUERY tag has the following syntax: 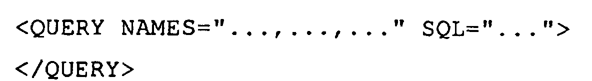 NAMES is a mandatory attribute representing a coma-separated list of names of loop control variables, values of attributes, selected from the database, being assigned to variables identified by these names.

15. Method according to anyone of claim 7 to 14,
**characterised by** a conditional statement tag with the structure: 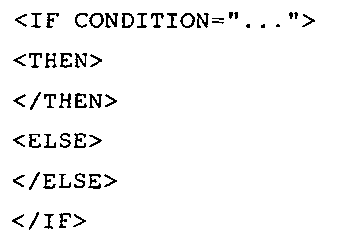 where CONDITION is a mandatory attribute of the IF tag containing an expression string that is evaluated to a Boolean value, said IF tag can contain only THEN and ELSE elements.

16. Method according to claim 15, **characterised by** an assigning value tag with the structure 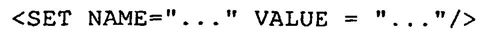 where NAME is a mandatory attribute representing the name of the variable which can be later referenced by the use of this name, VALUE is an optional attribute representing the value that should be assigned to the variable, said value can be a simple constant value as an expression that must be first evaluated.

17. Method according to claim 16, **characterised by** an inserting value tag with the structure 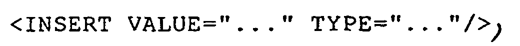 the INSERT tag being replaced with the value calculated from the contents of the VALUE attribute which is mandatory, said attribute can contain a simple value, a variable reference, or an expression that must be evaluated by the parser (4) prior to inserting, the TYPE attribute is optional and indicates the type of the value to be inserted, this attribute is used only for numerical and Boolean values.

18. Method according to claim 17, **characterised by** a connecting to database tag with the structure 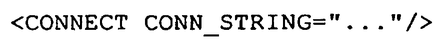 said CONNECT tag being required only in a case when the virtual world definitions are outside the database and the parser (4) must explicitly connect to the database to get some required data.

19. Method according to claim 18, **characterised by** a tag for including a structured markup language file in another structured markup language file, with the structure 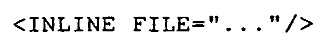 where INLINE tag has one mandatory attribute, FILE, which indicates location and name of the file to be included.

20. Method according to claim 19, **characterised by** a tag for defining classes, with the structure 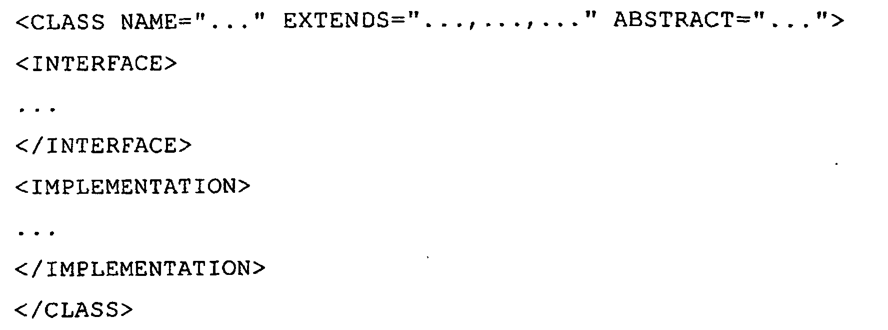 where NAME is a mandatory attribute, representing the name of the class, EXTENDS is an optional attribute representing names of class or classes extended by the newly created class, said names of class can be a single class name if the class inherits only from one superclass, or a coma-separated list of class names if the class inherits from more than one superclass, ABSTRACT is an optional attribute indicating that the class is abstract, INTERFACE is an optional attribute containing the interface part of the class definition such as declaration of attributes: fields, exposedFields, eventIns, and eventOuts in scenes modelling language, IMPLEMENTATION attribute containing the actual implementation of the class.

21. System for generating virtual scenes described in a virtual scene modelling language said virtual scene being intended to be displayed on at least one display device, **characterised in that** said system comprises:
- means for generating a virtual scene description in conformance with a description model based on a document structured markup language, this description model providing at least loops, conditional statements, assigning values to variables, inserting values, and use of classes;
- a parser (4) for translating said description into a virtual scene modelling language; and
- means for displaying said virtual scene on at least a display device.

22. System according to claim 21, **characterised in that** it comprises at least one database (8) which is connected to said parser (4) for data retrieval.

## Patentansprüche

1. Verfahren zur dynamischen Erzeugung virtueller Szenen, die in einer Modellierungssprache für virtuelle Szenen beschrieben sind, wobei die virtuelle Szene dazu vorgesehen ist, auf wenigstens einer DisplayVorrichtung dargestellt zu werden, **dadurch gekennzeichnet, daß** das Verfahren die folgenden Schritte beinhaltet:
- Erzeugen einer Beschreibung einer virtuellen Szene in Übereinstimmung mit einem Beschreibungsmodell, welches auf einer strukturierten Dokumentenauszeichnungssprache basiert, wobei dieses Beschreibungsmodell wenigstens Schleifen, Bedingungsanweisungen, Zuordnungswerte zu Variablen, Einsetzwerte und den Gebrauch von Klassen ermöglicht,
- Übersetzen der Beschreibung in eine virtuelle Szenenmodellierungssprache und
- Darstellen der virtuellen Szene auf wenigstens einer Display-Vorrichtung.

2. Verfahren nach Anspruch 1, **dadurch gekennzeichnet, daß** das Beschreibungsmodell des weiteren Anweisungen zum Verbinden mit wenigstens einer Datenbank (8) und zum Erhalten von Daten aus dieser Datenbank (8) vorsieht.

3. Verfahren nach Anspruch 2, **dadurch gekennzeichnet, daß** die während des Übersetzungsprozesses einschließlich Knoten, Prototypen, Routen, Feldern und sämtlichen Arten von Feldwerten verwendete virtuelle Datenwelt durch die Datenbank (8) vorgesehen sein kann.

4. Verfahren nach einem der Ansprüche 1 bis 3, **dadurch gekennzeichnet, daß** das Beschreibungsmodell nicht verschachtelte Datensätze aufweist, welche durch XML-Tags, die Namen und Eigenschaftsbeschreibungen haben, ausgedrückt sind.

5. Verfahren nach einem der Ansprüche 1 bis 3, **dadurch gekennzeichnet, daß** die strukturierte Auszeichnungssprache SGML ist.

6. Verfahren nach einem der Ansprüche 1 bis 4, **dadurch gekennzeichnet, daß** die strukturierte Auszeichnungssprache XML ist.

7. Verfahren nach einem der Ansprüche 1 bis 6, **dadurch gekennzeichnet, daß** die virtuelle Szenenmodellierungssprache VRML ist.

8. Verfahren nach einem der Ansprüche 1 bis 6, **dadurch gekennzeichnet, daß** die Modellierungssprache ein MPEG 4 Szenenbeschreibungsformat ist.

9. Verfahren nach Anspruch 4, **dadurch gekennzeichnet, daß** die XML-Tags aufweisen:
- leere Tags, die genutzt werden, um leere Elemente anzuzeigen, wobei die leeren Tags keine anderen Elemente oder Modellierungssprachencodes enthalten,
- Paare von Start-Tags und End-Tags, welche den gleichen Namen haben, die zum Definieren eines Elementes genutzt werden.

10. Verfahren nach einem der Ansprüche 3 bis 9, **gekennzeichnet durch** den Gebrauch von Tags in der Beschreibungsmodellsprache, die die folgenden unterschiedlichen Arten von Schleifen implementieren:
- FOR - Tag, das für numerische Werte genutzt wird, wobei die Schleife mit einer numerischen Steuerungsvariablen wiederholt wird, die von einem Startwert bis zu einem Endwert variiert und jedesmal **durch** einen Schrittwert geändert wird.
- ITERATOR - Tag, das für jeden Wert in einer spezifizierten Werteliste wiederholt wird,
- WHILE - Tag, das, solange eine Bedingung erfüllt ist, wiederholt wird,
- QUERY - Tag, das genutzt wird, um Daten aus einer Datenbank zu bekommen, wiederholt für jede Reihe von aus einer Datenbank ausgewählten Daten.

11. Verfahren nach Anspruch 10, wobei das Schleifen-Tag die folgende Syntax besitzt: 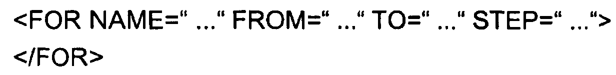 wobei das "FOR"-Element den Beschreibungsmodellsprachencode beinhaltet, der mehrfach mit dem wechselnden Steuerungsvariablenwert durchquert werden sollte, "NAME" ein verbindliches Attribut ist, welches den Namen der Schleifensteuerungsvariablen repräsentiert, wobei auf den Wert der Steuerungsvariablen im Inneren der Schleife zugegriffen werden kann, "FROM" ein zwingendes Attribut ist, welches den Anfangswert für die Schleifensteuerungsvariable während der ersten Schleifendurchquerung repräsentiert, wobei die Steuerungsvariable auf den durch dieses Attribut definierten Wert eingestellt ist und der Wert der Steuerungsvariablen nach jeder Schleifendurchquerung durch den durch das "STEP"-Attribut spezifizierten Wert modifiziert wird, "TO" ein zwingendes Attribut ist, welches den Endwert der Steuerungsvariablen repräsentiert, wobei die Schleife nicht mehr wiederholt wird, wenn die Steuerungsvariable den durch das "TO"-Atrribut spezifizierten Wert überschreitet, "STEP" ein optionales Attribut ist, welches den Wert repräsentiert, um welchen die Steuerungsvariable nach jedem Schleifendurchlauf modifiziert wird, wobei der Wert des "STEP"-Attributs positiv anzeigen kann, daß die Steuerungsvariable nach jedem Schleifendurchlauf gesteigert werden sollte, oder negativ anzeigen kann, daß der Wert der Steuerungsvariable verringert werden sollte.

12. Verfahren nach Anspruch 10, wobei das ITERATION - Tag die folgende Syntax besitzt: 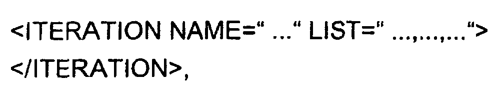 wobei "NAME" ein zwingendes Attribut ist, welches den Namen der Schleifensteuerungsvariablen repräsentiert, wobei auf den Wert der Steuerungsvariablen im Inneren der Schleife zugegriffen werden kann, "LIST" ein zwingendes Attribut ist, welches die Liste der numerischen oder nicht-numerischen Werte für die Schleifensteuerungsvariable während des ersten Durchlaufes der Schleife repräsentiert, wobei der Wert der Steuerungsvariablen auf das erste Element der Liste eingestellt ist, und die Steuerungsvariable während jeden weiteren Durchlaufs auf die nachfolgenden Elemente in der Liste eingestellt wird, wobei die Werte während der Gestaltungszeit eingegebene konstante Werte oder Ausdrücke sein können, die vor deren Zuordnung zur Schleifensteuerungsvariablen berechnet worden sind.

13. Verfahren nach Anspruch 10, wobei das "WHILE" - Tag die folgende Syntax besitzt: 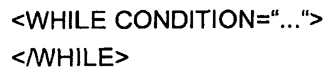 wobei "CONDITION" ein Ausdruck sein sollte, der einen Boolschen Wert auswertet, wobei die Schleife solange wiederholt wird, wie die ausgewertete Bedingung wahr ist.

14. Verfahren nach Anspruch 10, wobei das QUERY-Tag die folgende Syntax besitzt: 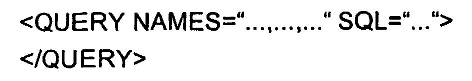 wobei "NAMES" ein zwingendes Attribut ist, welches eine kommagetrennte Namensliste von Schleifensteuerungsvariablen repräsentiert, wobei Werte von aus der Datenbank ausgewählten Attributen zu durch diese Namen identifizierten Variablen zugewiesen werden.

15. Verfahren nach einem der Ansprüche 7 bis 14, **gekennzeichnet durch** ein Bedingunsanweisungs-Tag mit der Struktur: 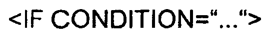 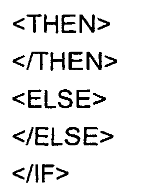 wobei CONDITION ein zwingendes Attribut des IF-Tags ist, welches eine Ausdrucksfolge beinhaltet, welche für einen Boolschen Wert ausgewertet wird, wobei das IF-Tag nur THEN - und ELSE - Elemente beinhalten kann.

16. Verfahren nach Anspruch 15, **gekennzeichnet durch** ein Wertzuordnungs-Tag mit der Struktur: 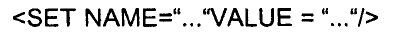 wobei NAME ein zwingendes Attribut ist, welches den Namen der Variablen repräsentiert, auf welche später **durch** Gebrauch dieses Namens Bezug genommen werden kann, VALUE ein optionales Attribut ist, welches den Wert repräsentiert, der der Variablen zugeordnet werden sollte, wobei der Wert ein einfacher konstanter Wert sowie ein Ausdruck sein kann, welcher zunächst bewertet werden muß.

17. Verfahren nach Anspruch 16, **gekennzeichnet durch** ein Werteinsatz-Tag mit der Struktur: 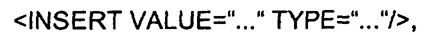 wobei das INSERT-Tag **durch** den aus den Inhalten des VALUE-Attributs berechneten Wert, welches zwingend ist, ersetzt wird, wobei das Attribut einen einfachen Wert, einen variablen Bezug oder einen Ausdruck beinhalten kann, welcher **durch** den Parser (4) vor dem Einsetzen bestimmt werden muß, das TYPE-Attribut optional ist und die Art des einzusetzenden Wertes anzeigt, wobei dieses Attribut nur für numerische und Boolsche Werte genutzt wird.

18. Verfahren nach Anspruch 17, **gekennzeichnet durch** ein Datenbankverbindungs-Tag mit der Struktur: 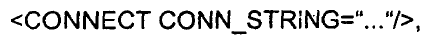 wobei das CONNECT-Tag nur in einem Fall erforderlich ist, in welchem die Definitionen der virtuellen Welt sich außerhalb der Datenbank befinden und der Parser (4) explizit zur Datenbank verbinden muß, um einige erforderliche Daten zu erhalten.

19. Verfahren nach Anspruch (18), **gekennzeichnet durch** ein Tag zum Einschließen einer Datei einer strukturierten Auszeichnungssprache in eine andere Datei einer strukturierten Auszeichnungssprache mit der Struktur: 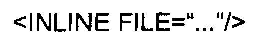 wobei das INLINE-Tag ein zwingendes Attribut, FILE, beinhaltet, welches den Ort und den Namen der einzuschließenden Datei anzeigt.

20. Verfahren nach Anspruch 19, **gekennzeichnet durch** ein Tag zur Definition von Klassen mit der Struktur: 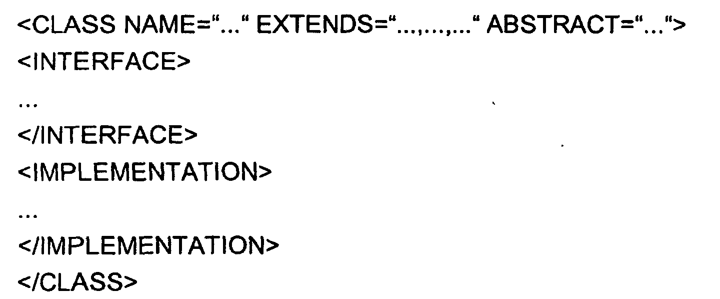 wobei NAME ein zwingendes Attribut ist, welches den Namen der Klasse repräsentiert, EXTENDS ein optionales Attribut ist, welches Namen der **durch** die neu erzeugten Klasse erweiterten Klasse oder Klassen repräsentiert, wobei die Namen der Klasse ein einfacher Klassenname sein können, falls die Klasse nur von einer Überklasse übernimmt, oder eine kommagetrennte Liste von Klassennamen sein können, falls die Klasse von mehr als einer Überklasse übemimmt, ABSTRACT ein optionales Attribut ist, welches anzeigt, daß die Klasse abstrakt ist, INTERFACE ein optionales Attribut ist, welches den INTERFACE-Teil der Klassendefinition wie die Deklaration der Attribute enthält: Fields, exposedFields, eventlns, und eventOuts in der szenenmodellierenden Sprache, IMPLEMENTATION-Attribut enthaltend die aktuelle Implementierung der Klasse.

21. System zur Erzeugung virtueller Szenen, die in einer virtuellen Szenenmodellierungssprache beschrieben sind, wobei die virtuelle Szene dazu vorgesehen ist, auf wenigstens einer Display-Einheit dargestellt zu werden, **dadurch gekennzeichnet, daß** das System aufweist:
- Mittel zum Erzeugen einer virtuellen Szenenbeschreibung in Übereinstimmung mit einem Beschreibungsmodell, welches auf einer strukturierten Dokumentanweisungssprache basiert, wobei das Beschreibungsmodell wenigstens Schleifen, Bedingungsanweisungen, Wertzuordnungen zu Variablen, Werteinsetzungen und den Gebrauch von Klassen ermöglicht,
- einen Parser (4) zum Übersetzen der Beschreibung in eine virtuelle Szenenmodellierungssprache und
- Mittel zum Darstellen der virtuellen Szene auf wenigstens einer Display-Einheit.

22. System nach Anspruch 21, **dadurch gekennzeichnet, daß** es wenigstens eine Datenbank 8 aufweist, welche mit dem Parser (4) zur Datenabfrage verbunden ist.

## Revendications

1. Procédé pour générer de manière dynamique des scènes virtuelles décrites dans un langage de modélisation de scènes virtuelles, ladite scène virtuelle étant destinée à être affichée sur au moins un dispositif d'affichage,
**caractérisé en ce que** ledit procédé comprend les étapes suivantes consistant à :
- générer une description de scène virtuelle en conformité avec un modèle de description basé sur un langage de balisage ayant la structure d'un document, ce modèle de description fournissant au moins des boucles, des instructions conditionnelles, l'affectation de valeurs à des variables, l'insertion de valeurs et l'utilisation de classes ;
- traduire ladite description dans un langage de modélisation de scène virtuelle ; et
- afficher ladite scène virtuelle sur au moins un dispositif d'affichage.

2. Procédé selon la revendication 1, **caractérisé en ce que** ledit modèle de description fournit en outre des instructions pour une connexion à au moins une base de données (8) et pour l'extraction de données à partir de ladite base de données (8).

3. Procédé selon la revendication 2, **caractérisé en ce que** les données de mondes virtuels, utilisées pendant le processus de traduction, comprenant des noeuds, des prototypes, des routes, des champs et tout type de valeurs de champ, peuvent être fournies par ladite base de données (8).

4. Procédé selon l'une quelconque des revendications 1 à 3, **caractérisé en ce que** ledit modèle de description comprend des registres de données non imbriquées exprimés par des balises XML qui ont des noms et des spécifications d'attributs.

5. Procédé selon l'une quelconque des revendications 1 à 3, **caractérisé en ce que** ledit langage de balisation structuré est SGML.

6. Procédé selon l'une quelconque des revendications 1 à 4, **caractérisé en ce que** ledit langage de balisation structuré est XML.

7. Procédé selon l'une quelconque des revendications 1 à 6, **caractérisé en ce que** ledit langage de modélisation de scène virtuelle est VRML.

8. Procédé selon l'une quelconque des revendications 1 à 6, **caractérisé en ce que** ledit langage de modélisation est un format de description de scènes MPEG 4.

9. Procédé selon la revendication 4, **caractérisé en ce que** lesdites balises XML comprennent :
- des balises vides utilisées pour indiquer des éléments vides, lesdites balises vides ne contenant aucun autre élément ou code du langage de modélisation,
- des paires de balises de départ et de balises de fin utilisant le même nom pour définir un élément.

10. Procédé selon les revendications 3 à 9, **caractérisé par** l'utilisation de balises dans ledit langage de modèle de description implémentant les différents types suivants de boucles :
- balise FOR, utilisée pour des valeurs numériques, la boucle est répétée avec une variable de commande numérique variant d'une valeur de départ à une valeur de fin, chaque fois modifiée par une valeur de palier.
- balise ITERATOR, répétée pour chaque valeur dans une liste spécifiée de valeurs,
- balise WHILE, répétée tant qu'une condition est remplie,
- balise QUERY, utilisée pour obtenir des données à partir d'une base de données, répétée pour chaque rangée de données sélectionnée à partir d'une base de données.

11. Procédé selon la revendication 10, dans lequel la balise en boucle a la syntaxe suivante : 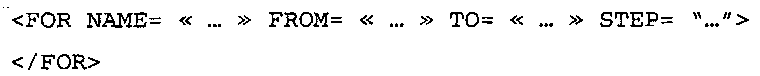 où l'élément FOR contient le code de langage du modèle de description qui devrait être traversé un certain nombre de fois avec la valeur variable de commande variable, NAME est un attribut obligatoire représentant le nom de la variable de commande de boucle, la valeur de la variable de commande peut être accédée à l'intérieur de la boucle, FROM est un attribut obligatoire représentant la valeur initiale pour la variable de commande de boucle, pendant la première traversée de boucle la valeur définie par cet attribut est affectée à la variable de commande et après chaque traversée de boucle, la valeur de la variable de commande est modifiée au montant spécifié par l'attribut STEP, TO est un attribut obligatoire représentant la valeur de fin pour la variable de commande, quand la variable de commande est supérieure à la valeur spécifiée par l'attribut TO, la boucle n'est plus répétée, STEP est un attribut en option représentant de combien sera modifiée la valeur de la variable de commande après chaque traversée de boucle, la valeur dudit attribut STEP peut être positive indiquant que la variable de commande devrait être augmentée après chaque traversée de boucle ou peut être négative indiquant que la valeur de variable de commande devrait être diminuée.

12. Procédé selon la revendication 10, dans lequel la balise ITERATION a la syntaxe suivante : 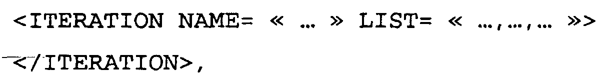 où NAME est un attribut obligatoire représentant le nom de la variable de commande de boucle, la valeur de la variable de commande peut être accédée à l'intérieur de la boucle, LIST est un attribut obligatoire représentant la liste de valeurs numériques
ou non numériques pour la variable de commande de boucle, pendant la première traversée de la boucle le premier élément de la liste est affecté à la valeur de la variable de commande et pendant chacune des traversées suivantes dans la liste, lesdites valeurs peuvent être des valeurs constantes fournies en entrée au moment de la conception ou des expressions calculées avant de les attribuer à la variable de commande de boucle.

13. Procédé selon la revendication 10, dans lequel la balise WHILE a la syntaxe suivante : 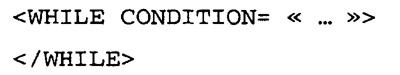 où CONDITION devrait être une expression estimant à une valeur booléenne, la boucle étant répétée tant que la condition est évaluée à TRUE.

14. Procédé selon la revendication 10, dans lequel la balise QUERY a la syntaxe suivante : 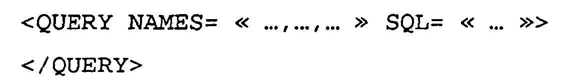 où NAMES est un attribut obligatoire représentant une liste de noms séparés par des virgules de variables de commande de boucle, de valeurs d'attributs, sélectionnées à partir de la base de données, attribuées à des variables identifiées par ces noms.

15. selon l'une quelconque des revendications 7 à 14,
**caractérisé par** une balise d'instruction conditionnelle avec la structure : 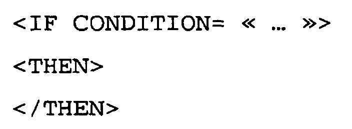 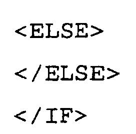 où CONDITION est un attribut obligatoire de la balise IF contenant une chaîne d'expressions qui est évaluée à une valeur booléenne, ladite balise IF peut contenir seulement les éléments THEN et ELSE.

16. Procédé selon la revendication 15, **caractérisé par** une balise de valeur d'attribution avec la structure :
<SET NAME= « ... » VALUE= « ... »/>
où NAME est un attribut obligatoire représentant le nom de la variable qui peut être ensuite référencée par l'utilisation de ce nom, VALUE est un attribut en option représentant la valeur qui devrait être attribuée à la variable, ladite valeur peut être une simple valeur constante comme une expression qui doit être d'abord évaluée.

17. Procédé selon la revendication 16, **caractérisé par** une balise de valeur d'insertion avec la structure : 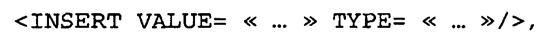 la balise INSERT étant remplacée par la valeur calculée à partir du contenu de l'attribut VALUE qui est obligatoire, ledit attribut peut contenir une simple valeur, une référence de variable ou une expression qui doit être évaluée par l'analyseur (4) avant l'insertion, l'attribut TYPE est optionnel et indique le type de la valeur devant être insérée, cet attribut est utilisé seulement pour des valeurs numériques et booléennes.

18. Procédé selon la revendication 17, **caractérisé par** une balise de connexion à une base de données avec la structure : 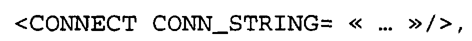 ladite balise CONNECT étant requise seulement dans un cas où les définitions de mondes virtuels sont à l'extérieur de la base de données et l'analyseur (4) doit explicitement se connecter à la base de données afin d'obtenir des données requises.

19. Procédé selon la revendication 18, **caractérisé par** une balise pour inclure un fichier de langage de balisation structuré dans un autre fichier de langage de balisation structuré, avec la structure :
<INLINE FILE= « ... »/>
où la balise INLINE a un attribut obligatoire, FILE, qui indique l'emplacement et le nom du fichier devant être inclus.

20. Procédé selon la revendication 19, **caractérisé par** une balise pour définir des classes, avec la structure : 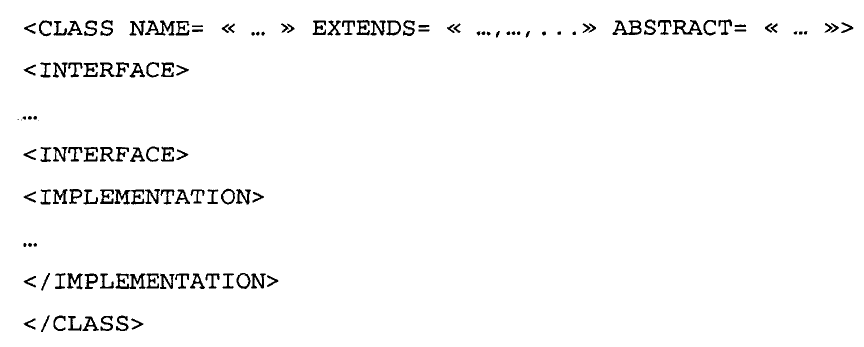 où NAME est un attribut obligatoire, représentant le nom de la classe, EXTENDS est un attribut en option représentant les noms de la classe ou des classes étendues par la classe nouvellement créée, lesdits noms de classe pouvant être un seul nom de classe si la classe hérite uniquement d'une superclasse, ou d'une liste de noms de classe séparés par une virgule si la classe hérite de plus d'une superclasse, ABSTRACT est un attribut en option indiquant que la classe est abstraite, INTERFACE est un attribut en option contenant la partie d'interface de la définition de classe comme la déclaration d'attributs : fields, exposedFields, eventIns et eventOuts dans un langage de modélisation de scènes, l'attribut IMPLEMENTATION contenant l'implémentation réelle de la classe.

21. Système pour générer des scènes virtuelles décrites dans un langage de modélisation de scènes virtuelles, ladite scène virtuelle étant destinée à être affichée sur au moins un dispositif d'affichage, **caractérisé en ce que** ledit système comprend :
- des moyens pour générer une description de scène virtuelle en conformité avec un modèle de description basé sur un langage de balisage ayant la structure d'un document, ce modèle de description fournissant au moins des boucles, des instructions conditionnelles, l'affectation de valeurs à des variables,, l'insertion de valeurs et l'utilisation de classes ;
- un analyseur (4) pour traduire ladite description en un langage de modélisation de scène virtuelle ; et
- des moyens pour afficher ladite scène virtuelle sur au moins un dispositif d'affichage.

22. Système selon la revendication 21, **caractérisé en ce qu'**il comprend au moins une base de données (8) qui est connectée au dit analyseur (4) pour un retrait de données.
